# EUROPEAN PATENT SPECIFICATION

(11) **EP 3 391 014 B1**
(45) Date of publication and mention of the grant of the patent: **12.02.2020**
(21) Application number: 16834107.1
(22) Date of filing: 16.12.2016
(51) Int. Cl.: G01M 17/02, G01M 11/02, H04N 17/00

(54) **METHOD FOR CALIBRATING OPTICAL TOOLS OF A TYRE CHECKING SYSTEM**
VERFAHREN ZUR KALIBRIERUNG VON OPTISCHEN WERKZEUGEN EINES REIFENKONTROLLSYSTEMS
PROCÉDÉ POUR CALIBRER DES OUTILS OPTIQUES D'UN SYSTÈME DE CONTRÔLE DES PNEUS

(30) Priority: 17.12.2015 IT UB20159334
(43) Date of publication of application: 24.10.2018
(60) Divisional application: 19213796.6
(73) Proprietor: Pirelli Tyre S.p.A., 20126 Milano (IT)
(72) Inventor: BOFFA, Vincenzo, I-20126 Milano (IT); MARCHINI, Maurizio, I-20038 Seregno (MB) (IT); BORACCO, Stefano, I-20126 Milano (IT); ENGELSBERGER, Josef, 83115 Neubeuern (DE); CASADIO TOZZI, Giuseppe, I-40026 Imola (BO) (IT); MONTI, Stefano, I-40026 Imola (BO) (IT)
(74) Representative: Baroni, Matteo
(86) International application number: PCT/IB2016/057709
(87) International publication number: WO 2017/103871

(56) References cited:
- WO-A1-97/15898
- US-A1- 2005 167 499
- US-A1- 2008 202 229

## Description

The present invention refers to a method for checking tyres.

A tyre for vehicle wheels generally comprises a carcass structure comprising at least one carcass ply having respectively opposite end flaps engaged with respective annular anchoring structures, generally called "bead cores", identified in the areas usually referred to as "beads", having an inner diameter substantially corresponding to a so-called "fitting diameter" of the tyre for fitting it on a respective mounting rim. The tyre also comprises a crown structure comprising a belt structure having at least one belt strip arranged in radially external position with respect to the carcass ply(ies) and a radially external tread band with respect to the belt strip(s). Between the tread band and the belt strip(s) a so-called "underlayer" may be interposed, made of elastomeric material of suitable properties to ensure a stable union of the belt strip(s) with the tread band itself. On the side surfaces of the carcass structure, each extending from one of the side edges of the tread band up to the respective annular anchoring structure to the beads, respective sidewalls made of elastomeric material are also applied. In "tubeless" tyres, the carcass ply is internally coated with a layer of elastomeric material, preferably a butyl based one, usually referred to as "liner" having optimal air tightness properties and extending from one of bead to another.

The terms "optical", "light" and the like refer to an electromagnetic radiation used that has at least a portion of the spectrum falling around a widened range of the light band, and not necessarily falling strictly within the band visible to the human eye (i.e. 400-700 nm), for example such a widened range of the light band can go from ultraviolet to infrared (for example wavelength comprised between about 100 nm and about 1 µm).

The term "optical tool" is meant to indicate a unit comprising: a support, adapted for allowing the association between the optical tool and an automated structure belonging to a tyre checking system; at least one emitter device capable of emitting a light radiation, mounted on said support; at least one detector device capable of detecting such light radiation, mounted on said support. In particular, the detector device is capable of detecting the light radiation emitted by the emitter device, after such radiation has interacted (e.g. according to reflection and/or diffusion phenomena) with a tyre to be subjected to checking.

The term "automated structure" is meant to indicate a unit comprising: a support structure adapted for supporting an optical tool; one or more actuators for moving said support structure, adapted for receiving control signals from an electronic unit. The support structure can comprise two or more segments, connected together in succession so as to make an articulated structure with many degrees of freedom. An automated structure can comprise, for example, one or more anthropomorphic or Cartesian robotic arms.

In processes for producing and building tyres for vehicle wheels it is suitable to perform quality checks on the products made, with the purpose of preventing defective tyres from being able to be put on sale, and/or of progressively adjusting the apparatuses and the machinery used, so as to improve and optimise the performance of the operations carried out in the production process. Such quality checks include for example those carried out by human operators who spend a predetermined time, for example comprised between 30 s and 60 s, for a visual and tactile examination of the tyre; if, in light of his/her experience and capability, the operator suspects that the tyre does not meet certain quality standards, the tyre itself is subjected to further checks, through a more detailed human analysis and/or suitable apparatuses, in order to have a more detailed evaluation of possible structural and/or quality deficiencies.

Document EP 1120640 A1 describes an apparatus for examining the appearance and the shape of a tyre, and in particular to evaluating the quality of an inner surface of the tyre itself. The tyre is positioned on a rotary table. A support structure keeps light emitters and cameras at the centre of the hollow portion of the tyre, so as to detect the characteristics of interest.

Document US 2012/0134656 A1 describes an illumination device and an inspection device for detecting defects in the shape of a tyre.

The Applicant has observed that apparatuses/devices of the type illustrated in EP 1120640 A1 and US 2012/0134656 A1, respectively, are based on the emission and on the detection of electromagnetic radiation, in particular light radiation. In order for the detection to be able to be precise and reliable, the tools used must therefore be suitably calibrated particularly in order to position them precisely with respect to the field that they must frame, so that they are centred and in focus.

The Applicant also considers it preferable for the check on the tyres to be carried out substantially on line, i.e. substantially continuously downstream of the production process of the tyres themselves.

In this context, the Applicant has verified that, during the operation of the checking systems, an optical tool may have a failure or malfunction such as to make the tool itself no longer suitable and to require the replacement thereof.

By carrying out the replacement of such optical tools, the Applicant has noted that, in general, optical tools that are even structurally identical to one another can have different behaviours from one another. This means that, with all of the other operating conditions being the same, they can provide detections that are not homogeneous with each other (i.e. conflicting) of a same identical object. In a system for checking the quality of tyres, this translates into serious dishomogeneities in the detection and interpretation of the detected data, making the check itself not very reliable.

The Applicant has verified that these dishomogeneities can be due to the fact that the various optical tools, although structurally substantially identical to one another, are initially configured/calibrated in a substantially random manner, thus differently from one another. For example, the focusing range and the direction of the axes of the images could be different with respect to the mechanical axes of the respective supports.

On the other hand, the Applicant has observed that a precise and reliable calibration should be carried out after the optical tool has been mounted in operative position, i.e. when the tool itself is in the real conditions in which it actually has to operate.

The Applicant has however verified that performing a calibration of a tool after mounting on the respective support, following the removal and replacement of a malfunctioning tool, introduces significant delays in the checking activity and makes the entire process highly inefficient.

The Applicant has therefore perceived the need to provide a technical solution that makes it possible not to cause excessive delays in the performance of the quality checking activity, even in situations in which it is necessary to remove one optical tool and mount a new one, and which in any case allows a substantial repeatability to be maintained in the emission/detection operations of light radiation, even though different optical tools are used.

The Applicant observes that the aforementioned documents EP 1120640 A1 and US 2012/0134656 A1 do not provide any teaching or suggestion relative to the replacement of an optical tool and to the repeatability of the detections after such replacement. The documents just quoted also do not provide an indication on the management of the timing of the checking operations in situations in which an optical tool must be replaced.

In the opinion of the Applicant, the technical solution sought must provide a tyre checking system with a plurality of substantially interchangeable optical tools: one of such tools to be mounted initially on an automated structure belonging to said system, and one or more optical tools, interchangeable with the one initially mounted, to be kept available. In this way, at the moment when the tool initially mounted fails, it can be quickly replaced with one of the other tools available, the latter immediately becoming operative.

The Applicant has therefore worked out that providing a plurality of optical tools of the same type, so that they have the same optical behaviour once mounted on the same automated structure, can allow idle times to be avoided following the replacement of a malfunctioning optical tool with another one prepared beforehand, and can allow the quality checking operations to continue in a reliable manner.

The Applicant has thus found that a calibration of all of the optical tools of a certain type, carried out beforehand and in a homogeneous manner, through a structure that faithfully reproduces the real operating conditions of the optical tools themselves, can make such tools immediately operative at the moment of mounting following a replacement.

In accordance with an aspect, the invention is related to a method for checking tyres according to claim 1.

The Applicant believes that through the method according to the invention, the checking activity only suffers brief interruptions, which are substantially unavoidable, for only the mechanical operations of removal of the tool that is no longer suitable and of mounting the replacement.

The present invention can include one or more of the preferred features described hereinafter.

Preferably, mounting an optical tool to said first engagement portion comprises associating a support belonging to said optical tool with said first engagement portion.

Preferably, adjusting the mutual position of the optical tool and of said reference element comprises moving at least one from an emitter device and a detector device belonging to said optical tool relative to said support.

Preferably, each of said optical tools is adapted for being associated with said mounting portion through the respective support.

Preferably, adjusting the mutual position of the optical tool and of said reference element comprises moving said reference element relative to said second engagement portion through a respective movement structure.

Preferably, a visible representation of an optical axis of said optical tool is associated with said optical tool.

Preferably, said visible representation is a tangible representation of said optical axis.

Preferably, said calibration is performed also as a function of the position of said representation of the optical axis of said optical tool.

Preferably, said representation of the optical axis of said optical tool is mounted on said support.

Preferably, associating each of said optical tools with said first engagement portion comprises associating the optical tools of the first group with the replica of the first mounting portion belonging to the first engagement portion.

Preferably, associating each of said optical tools with said first engagement portion comprises associating the optical tools of the second group with the replica of the second mounting portion belonging to the first engagement portion.

Preferably, said movement structure comprises a first movement member.

Preferably, said first movement member is active on said reference element to move said reference element along a substantially straight trajectory in a first direction.

Preferably, said first movement member comprises a first rotary drive element.

Preferably, said first movement member comprises a first transducer mechanism for converting the rotary motion of said first drive element into a substantially straight motion along said first direction.

Preferably, said movement structure comprises a second movement member.

Preferably, said second movement member is active on said reference element to move said reference element along a substantially straight trajectory in a second direction.

Preferably, said second direction is substantially transversal to said first direction.

Preferably, said second direction is substantially perpendicular to said first direction.

Preferably, said second movement member comprises a second rotary drive element.

Preferably, said second movement member comprises a second transducer mechanism for converting the rotary motion of said second drive element into a substantially straight motion in said second direction.

Preferably, said movement structure comprises a third movement member.

Preferably, said third movement member is active on said reference element to move said reference element along a substantially straight trajectory in a third direction.

Preferably, said third direction is substantially transversal to said first and second direction.

Preferably, said third direction is substantially perpendicular to said first and second direction.

Preferably, said third movement member comprises a third rotary drive element.

Preferably, said third movement member comprises a third transducer mechanism for converting the rotary motion of said third drive element into a substantially straight motion in said third direction.

Preferably, said first movement member comprises a first base that is moveable in said first direction.

Preferably, said second movement member is mounted on said first base.

Preferably, said second movement member comprises a second base that is movable in said second direction.

Preferably, said third movement member is mounted on said second base.

Preferably, said reference element is mounted on a third moveable base.

Preferably, said third moveable base belongs to said third movement member.

Preferably, said third moveable base is moveable in said third direction.

Preferably, said frame comprises a base plate.

Preferably, said frame comprises a fixing structure.

Preferably, said fixing structure is integral with said base plate.

Preferably, said fixing structure defines said first engagement portion.

Preferably, said second engagement portion is defined on said base plate.

Preferably, said fixing structure comprises a pair of flanges.

Preferably, said flanges extend from said base plate.

Preferably, said fixing structure comprises one or more cross-members connecting said flanges.

Preferably, said flanges are substantially parallel to one another.

Preferably, said cross-members are substantially perpendicular to said flanges.

Preferably, said reference element comprises a screen adapted to display predefined shapes for the calibration of said optical tools.

Further characteristics and advantages will become clearer from the detailed description of a preferred and not exclusive embodiment of the invention. Such a description is provided hereinafter with reference to the attached figures, also being given purely as examples and therefore not for limiting purposes, in which:
- figure 1 schematically shows a plant for making tyres for vehicle wheels;
- figure 2 illustrates an enlarged top side view of a tyre checking system belonging to the plant of figure 1;
- figure 3 illustrates a perspective view of a station belonging to the system of the previous figures;
- figure 4 shows a perspective view of an apparatus, according to the present invention, for the calibration of optical tools used in the system of the previous figures;
- figure 5 shows the apparatus of figure 4 in a side view;
- figure 6 schematically shows the apparatus of figure 4, with some parts eliminated to better highlight others, associated with an optical tool;
- figure 7 shows forms that can be used for the calibration performed by the apparatus of figures 4-6;
- figure 8 schematically shows an optical tool belonging to the system of figures 2-3;
- figure 9 shows a block diagram representative of a division of optical tools to which the invention can be advantageously applied.

With reference to the attached figures, reference numeral 1 indicates a tyre checking system in which the invention can have advantageous application.

The system 1 can be arranged downstream of a tyre production line 12, so as to carry out the checking of such tyres after moulding and vulcanisation.

In addition or alternatively, the system 1 can operate at the end of the building and before the moulding and vulcanisation step.

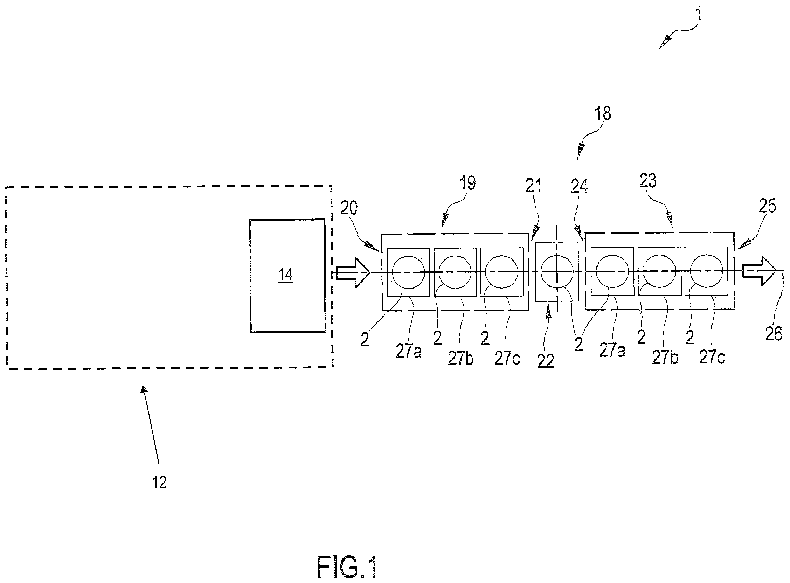

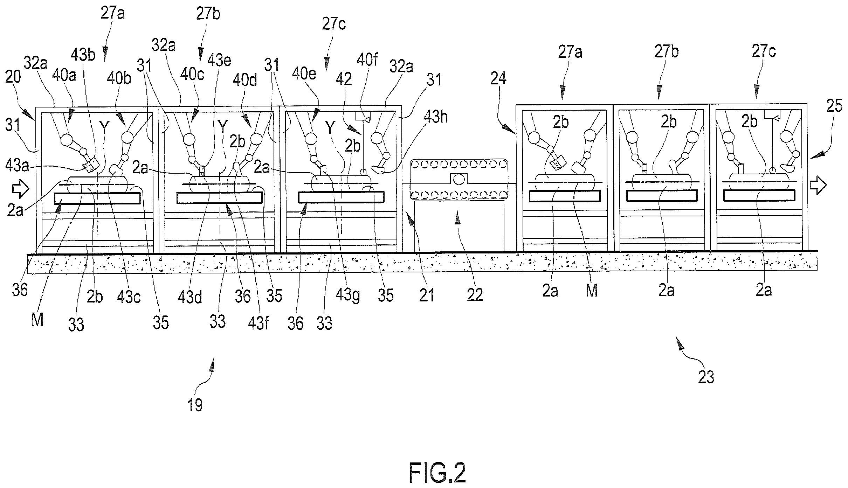

In the embodiments of figures 1, 2 and 3, the tyre checking system 1 arranged downstream of the moulding and vulcanisation unit 14, comprises a first checking unit 19 which has an inlet 20 for the finished tyres 2 to be checked that come from the production line 12 and a respective outlet 21. Downstream of the first checking unit 19, at the outlet 21 of said first checking unit 19, an overturning and transportation device 22 is arranged. Downstream of the overturning and transportation device 22 a second checking unit 23 is positioned, which has an inlet 24 for the finished tyres 2 that come from the overturning and transportation device 22 and a respective outlet 25. The inlet 20 of the first checking unit 19 constitutes the inlet of the system 1 for checking tyres. The outlet 25 of the second checking unit 23 constitutes the outlet of the system 1 for checking tyres. The tyres 2 to be checked enter one after another in sequence into the inlet 20, travel in sequence along a checking path 26 inside the system 1 for checking tyres and come out through the outlet 25. Along the checking path 26, which in the embodiment illustrated in figures 1 and 2 is straight, the tyres 2 are subjected to quality checks in order to verify the possible presence of defects according to ways that will be described hereinafter.

The first checking unit 19 comprises a first checking station 27a, a second checking station 27b and a third checking station 27c arranged in sequence one after another along the checking path 26.

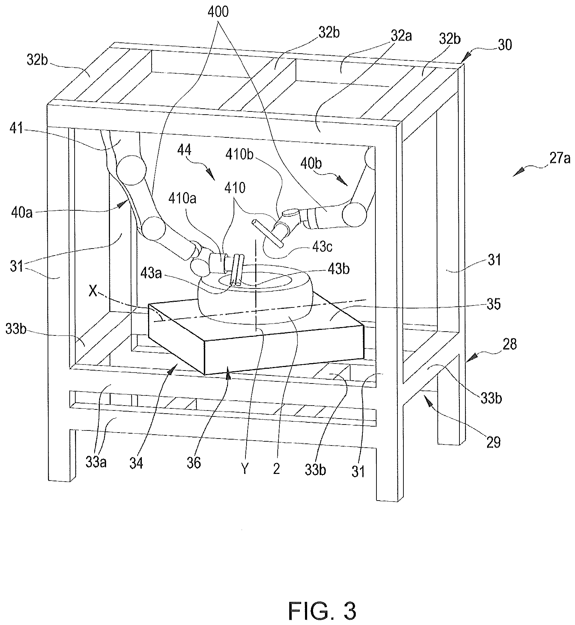

Each of the quoted checking stations 27a, 27b, 27c comprises (figure 3 that illustrates the first checking station 27a) a frame 28 having a lower portion 29 configured to be rested on the ground and an upper portion 30 that extends above the lower portion 29. The frame 28 illustrated is a framework formed from four vertical uprights 31 arranged, in plan, at the vertices of a square or of a rectangle. The vertical uprights 31 are connected at the top, at the upper portion 30, by a pair of longitudinal cross members 32a (oriented parallel to the checking path 26) and by a plurality of transversal upper cross members 32b (oriented perpendicular to the checking path 26).

The same vertical uprights 31 are connected at the bottom, at the lower portion 29, by a plurality of longitudinal lower cross members 33a and by a plurality of transversal lower cross members 33b.

The lower cross members 33a, 33b carry a support 34 defined by a rotary table that has a substantially horizontal resting area 35 configured to receive and support a sidewall of the finished tyre 2 to be checked. Such a resting area 35 can be defined by the upper branch of a conveyor belt, not illustrated in detail in the attached figures, belonging to the support 34. The conveyor belt defines a transferring device 36 of the tyres 2 from one checking station 27a, 27b, 27c to a subsequent checking station 27b, 27c of the same checking unit 19, 23 or to the overturning and transportation device 22.

In greater detail, in the embodiment schematised in figure 3, the support 34 comprises a rotary table hinged to the lower portion 29 about a vertical rotation axis "Y". The rotary table is preferably associated with the conveyor belt that defines a transportation direction "X" during its translation movement.

In a different embodiment, not illustrated, instead of the conveyor belt, rollers can be provided on which the tyre 2 rests directly.

Advantageously, the system 1 comprises an automated structure 400, through which optical tools 43 (which will be described more clearly hereinafter) are moved, to carry out checking operations on the tyres 2.

Preferably, the automated structure 400 comprises one or more anthropomorphic robotic arms 40a-40f; for example each checking station 27a-27c can comprise two anthropomorphic robotic arms (indicated, in figure 3, by reference numerals 40a, 40b) mounted above the support 34 and constrained to the transversal upper cross members 32b. Each of the quoted anthropomorphic robotic arms 40a, 40b, has its own base portion 41 joined to the transversal upper cross members 32b and a series of segments arranged consecutively, from the base portion 41, and connected by joints. Each anthropomorphic robotic arm preferably has at least five axes/degrees of freedom.

Each anthropomorphic robotic arm 40a, 40b extends canti-levered from the transversal upper cross members 32b above the resting area 35. In the illustrated embodiment, the two base portions 41 of the anthropomorphic robotic arms 40a, 40b are mounted at opposite longitudinal ends of the longitudinal cross members 32a and at opposite edges of the frame 28. Said base portions 41 do not therefore lie directly above the support 34 but are displaced at opposite sides thereof.

A terminal end of each anthropomorphic robotic arm 40a, 40b carries one or more optical tools 43a, 43b, 43c. In particular, each anthropomorphic robotic arm 40a, 40b has, at its free end, a mounting portion 410, adapted for coupling with an optical tool 43.

Between the resting area 35 and the quoted transversal upper cross members 32b, the frame 28 delimits a manoeuvring space 44 for the anthropomorphic robotic arms 40a, 40b and for the respective optical tools. The anthropomorphic robotic arms 40a, 40b define support and movement devices of the optical tools 43a, 43b, 43c.

The first checking station 27a, the second checking station 27b and the third checking station 27c have the same structure described apart from the type of optical tools 43a, 43b, 43c, 43d, 43e, 43f, 43g, 43h carried by the respective anthropomorphic robotic arms 40a, 40b, 40c, 40d, 40e, 40f.

As an example, a first anthropomorphic robotic arm 40a of the first checking station 27a carries a first optical tool 43a comprising a first digital camera and a light source, for example using LEDs, adapted for illuminating the portion of the tyre 2 framed by the first digital camera with diffused light and/or directed substantially like the optical axis of the first camera or with an oblique light and/or directed inclined relative to the optical axis of said first camera. The same first anthropomorphic robotic arm 40a also carries a second optical tool 43b comprising a second camera and a laser light directed inclined relative to the optical axis of said second camera, so as to be able to highlight particular profiles of the tyre 2, for example on the radially inner portion of the tread band or on the radially outer portion of the sidewall.

A second anthropomorphic robotic arm 40b of the first checking station 27a carries a single third optical tool 43c comprising a third digital camera and a light source distanced from the third camera (for example by means of a suitable frame) and oriented according to an angle preferably comprised between about 60° and about 100°, for example about 90° with respect to the optical axis of said third camera, so as to project an oblique light on the tyre 2 that is capable of highlighting raised defects of the tyre 2 itself, for example protrusions of the cords between the beads of the tread band. The same optical tool 43b preferably comprises a low resolution scanner, so as to be able to scan particular profiles of the tyre 2, for example the radially inner portion of the tread band.

A third anthropomorphic robotic arm 40c belonging to the second checking station 27b carries a fourth optical tool 43d similar or identical to the first optical tool 43a and comprising a fourth digital camera and a light source adapted for illuminating the portion of the tyre 2 framed by the fourth digital camera with diffused light and/or directed substantially like the optical axis of the fourth camera or with an oblique light and/or directed inclined with respect to the optical axis of said fourth camera.

The same third anthropomorphic robotic arm 40c also carries a fifth optical tool 43e comprising a fifth camera and a laser light directed inclined with respect to the optical axis of said fifth camera so as to be able to highlight particular profiles of the tyre 2, for example the radially outer portion of the tread band or of the bead.

A fourth anthropomorphic robotic arm 40d belonging to the second checking station 27b carries a single sixth optical tool 43f comprising a sixth camera and a laser light directed inclined with respect to the optical axis of said sixth camera, so as to be able to highlight particular profiles of the tyre 2, for example of the sidewall. The sixth optical tool 43f also comprises a mirror that intercepts the optical axis of the sixth camera to frame radially inner portions of the tyre 2 for example relative to the sidewall, to the shoulder or to the bead. The aforementioned mirror also intercepts the laser light, projecting it towards the framed field.

A fifth anthropomorphic robotic arm 40e belonging to the third checking station 27c carries a single seventh optical tool 43g similar or identical to the first optical tool 43a and comprising a seventh digital camera and a light source adapted for illuminating the portion of the tyre 2 framed by the seventh digital camera with diffused light and/or directed substantially like the optical axis of the seventh camera or with an oblique light and/or directed inclined with respect to the optical axis of said seventh camera.

A sixth anthropomorphic robotic arm 40f belonging to the third checking station 27c carries an eighth optical tool 43h also similar or identical to the first optical tool 43a and comprising an eighth digital camera and a light source adapted for illuminating the portion of the tyre 2 framed by the eighth digital camera with diffused light and/or directed substantially like the optical axis of the eighth camera or with an oblique light and/or directed inclined with respect to the optical axis of said eighth camera.

Said eighth optical tool 43h also comprises a mirror that intercepts the optical axis of the eighth camera to frame radially inner portions of the tyre 2.

The second checking unit 23 also comprises a first checking station 27a, a second checking station 27b and a third checking station 27c arranged in sequence one after another along the checking path 26. Said checking stations 27a, 27b, 27c of the second checking unit 23 are attributed the same reference numerals as the checking stations 27a, 27b, 27c of the first checking unit 19 because they are substantially identical to said checking stations 27a, 27b, 27c of the first checking unit 19 (including the optical tools 43a, 43b, 43c, 43d, 43e, 43f, 43g, 43h). Therefore, they will not be described again here in detail.

The system 1 for checking tyres is also equipped with an electronic management unit, not illustrated, operatively connected to the anthropomorphic robotic arms 40a, 40b, 40c, 40d, 40e, 40f of the first checking unit 19 and of the second checking unit 23, to the optical tools 43a, 43b, 43c, 43d, 43e, 43f, 43g, 43h, to the motors that allow the rotation of the supports 34, to the motors that move the conveyor belts to the possible further optical tools and possible sensors belonging to the system 1 itself, to the motors of the overturning and transportation device 22.

Said electronic management unit can be the same electronic management unit of the entire plant 1 or it can be operatively connected to one or more other units dedicated to other parts of the plant 1. The electronic management unit manages the operation of the system 1 for checking tyres preferably in coordination with the production line 12 arranged upstream.

Reference numeral 43 indicates, singularly or as a whole, the optical tools 43a, 43b, 43c, 43d, 43e, 43f, 43g, 43h belonging to the system 1 for checking tyres briefly described above.

In general, each optical tool 43 comprises: at least one emitter device 220 capable of emitting a light radiation; at least one detector device 230 capable of detecting said light radiation; a support 210, on which said emitter device 220 and said detector device 230 are mounted.

As an example, as described above, the detector device 230 can be a digital camera. Preferably, the emitter device 220 can be a light source, for example using LEDs, adapted for illuminating the portion of the tyre 2 framed by said digital camera.

Advantageously, at least one from the emitter device 220 and detector device 230 is movable with respect to the support 210. In particular, movement (e.g. translation) mechanisms are provided that allow the position of the emitter device 220 and/or of the detector device 230 to be adjusted with respect to the support 210.

As stated, the automated structure 400 takes care of moving the optical tools 43 to carry out the checking operations. In particular, the support 210 of each optical tool 43 is integrally associable with a mounting portion 410 of the automated structure 400.

Preferably, a mounting portion 410 is provided at the free end of each anthropomorphic robotic arm, so that a respective optical tool 43 can be mounted on each anthropomorphic robotic arm.

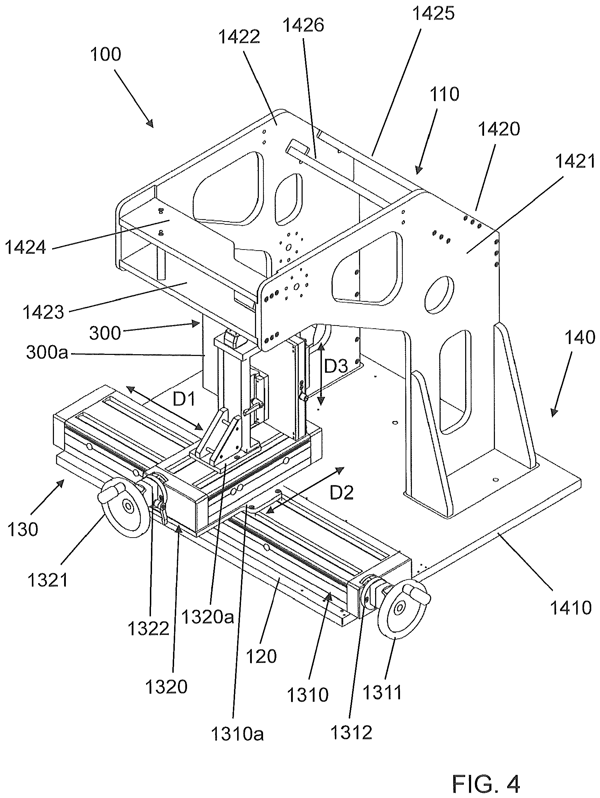

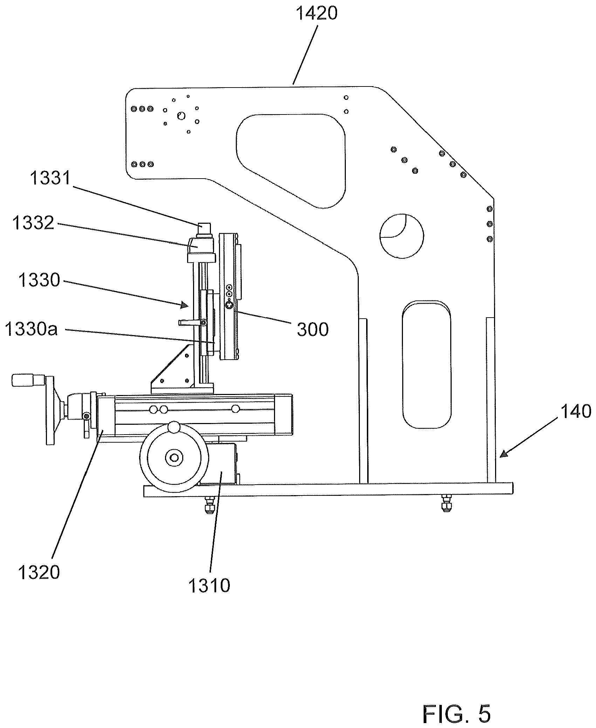

Figures 4-5 show an embodiment of an apparatus 100 for the calibration of optical tools in accordance with the invention.

The apparatus 100 firstly comprises a frame 140.

The frame 140 has a first engagement portion 110 and a second engagement portion 120.

The first engagement portion 110 is useful for mounting an optical tool 43 on said frame 140.

In particular, the first engagement portion 110 is adapted to be integrally constrained to the support 210 of an optical tool 43.

The first engagement portion 110 comprises a replica of the mounting portion 410 of the automated structure 400 on which the optical tool 43 must be mounted. In other words, the first engagement portion 110 of the frame 140 has substantially identical coupling structure and mode as those of the mounting portion of the automated structure 400.

Preferably, the frame 140 comprises a base plate 1410, having a substantially plate-shaped configuration, and a fixing structure 1420 integral with the base plate 1410 itself.

The fixing structure 1420 defines the aforementioned first engagement portion 110.

Preferably, the fixing structure 1420 comprises a pair of flanges 1421, 1422 extending perpendicularly from said base plate 1410.

Preferably, the fixing structure 1420 also comprises one or more cross-members 1423-1426, rod-shaped or plate-shaped, connecting said flanges 1421, 1422.

Preferably, the flanges 1421, 1422 are substantially parallel to one another.

Preferably, the cross-members 1423-1426 are substantially perpendicular to the flanges 1421, 1422.

As shown in figure 4, the flanges 1421, 1422 are equipped with a plurality of operative portions, comprising holes and/or openings of adequate shape and size, which allow the supports 210 of different optical tools 43 to be constrained to the fixing structure 1420.

In other words, the support 210 of each optical tool 43 is configured so as to couple integrally with the mounting portion 410 of the respective automated structure 400. If two optical tools must be mounted on two different mounting portions of the automated structure 400, then the respective supports will typically have different configurations to each other. In order to allow both of the optical tools (i.e. the respective supports) to be constrained to the fixing structure 1420, the flanges 1421, 1422 are equipped with the aforementioned holes and/or openings suitably provided.

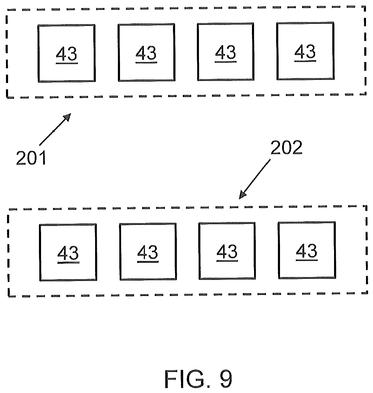

In more general terms, the optical tools 43 can be divided into at least a first group 201 and a second group 202 (figure 9): the optical tools of the first group 201 are integrally associable with a first mounting portion 410a (schematically indicated in figure 3) of the automated structure 400, whereas the optical tools of the second group 202 are associable with a second mounting portion 410b (schematically indicated in figure 3) of the automated structure 400.

In practice, once the calibration has ended and before activating the system 1, one of the optical tools of the first group 201 will be mounted on the first mounting portion 410a, whereas the remaining optical tools of such a group will be kept available to replace the tool mounted first, in the case of failures or malfunctions.

Similarly, one of the optical tools of the second group 202 will be mounted on the second mounting portion 410b, whereas the remaining tools of the second group will be kept available.

The first engagement portion 110 thus comprises both a replica of the first mounting portion 410a, and a replica of the second mounting portion 410b.

The second engagement portion 120 is useful for mounting a reference element 300 on the frame 140.

In particular, the second engagement portion 120 is defined on the base plate 1410, in a position substantially facing the fixing structure 1420.

The reference element 300 preferably consists of a screen 300a adapted to display predefined shapes for the calibration of the optical tools 43.

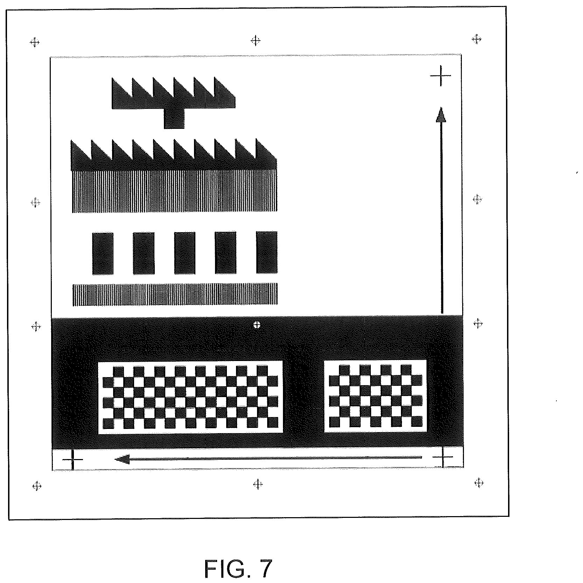

Figure 7 shows some examples of such predefined shapes.

It should be noted that, depending on the type of calibration to be carried out and as a function of the specific optical tool that must be calibrated, only some of the predefined shapes available can be displayed on the screen 300a.

Preferably, the reference element 300 is constrained to the second engagement portion 120 of the frame 140 through a movement structure 130.

The movement structure 130 allows the reference element to be moved with respect to the frame 140, and in particular with respect to the base plate 1410.

In a preferred embodiment, the movement structure allows the reference element 300 to translate according to a pair of directions substantially parallel to the base plate 1410 and substantially perpendicular to each other, and according to a further direction, substantially perpendicular to the base plate 1410 - thus substantially vertical.

Preferably, the movement structure 130 comprises a first movement member 1310 active on the reference element 300 to move the latter along a substantially straight trajectory in a first direction D1.

The first direction D1 is preferably parallel to the base plate 1410.

Preferably, the first movement member 1310 comprises a first rotary drive element 1311 and a first transducer mechanism 1312. The first transducer mechanism 1312 has the task of converting the rotary motion of the first drive element 1311 into a substantially straight motion along the first direction D1.

In practice, the first rotary drive element 1311 can be made as a wheel, able to be moved in rotation manually, about its own central axis, by an operator. The first transducer mechanism 1312, based for example on a rack-pinion coupling, allows the rotary motion of the first rotary drive element 1311 to be transformed into a translation of the reference element 300 along the first direction D1.

Preferably, the movement structure 130 comprises a second movement member 1320 active on the reference element 300 to move the latter according to a substantially straight trajectory in a second direction D2.

The second direction D2 is preferably parallel to the base plate 1410 and perpendicular to the first direction D1.

Preferably, the second movement member 1320 comprises a second rotary drive element 1321 and a second transducer mechanism 1322. The second transducer mechanism 1322 has the task of converting the rotary motion of the second drive element 1321 into a substantially straight motion along the second direction D2.

In practice, the second rotary drive element 1321 can be made as a wheel, able to be moved manually in rotation, about its own central axis, by an operator. The second transducer mechanism 1322, based for example on a rack-pinion coupling, allows the rotary motion of the second rotary drive element 1321 to be transformed into a translation of the reference element 300 along the second direction D2.

Preferably, the movement structure 130 comprises a third movement member 1330 active on the reference element 300 to move the latter according to a substantially straight trajectory in a third direction D3.

The third direction D3 is preferably transversal, and in particular perpendicular, to the first direction D1 and to the second direction D2. The third direction D3 is thus preferably perpendicular to the base plate 1410.

Preferably, the third movement member 1330 comprises a third rotary drive element 1331 and a third transducer mechanism 1332. The third transducer mechanism 1332 has the task of converting the rotary motion of the third drive element 1331 into a substantially straight motion along the third direction D3.

In practice, the third rotary drive element 1331 can be made as a wheel, able to be moved manually in rotation, about its own central axis, by an operator. The third transducer mechanism 1332, based for example on a rack-pinion coupling, allows the rotary motion of the third rotary drive element 1331 to be transformed into a translation of the reference element 300 along the third direction D3.

Preferably, the first movement member 1310 comprises a first base 1310a moveable along the first direction D1. The second movement member 1320 is preferably mounted on such a first base 1310a. In other words, the first base 1310a is moved in translation, along the first direction D1, by the first rotary drive element 1311 and by the first transducer mechanism 1312. This movement causes a displacement of the entire structure of the second movement member 1320, which is integrally mounted on the first base 1310a.

Preferably, the second movement member 1320 preferably comprises a second base 1320a, on which the third movement member 1330 is mounted. The second base 1320a, by virtue of the action of the second rotary drive element 1321 and of the second transducer mechanism 1322, is moved along the second direction D2.

Preferably, the third movement member 1330 preferably comprises a third base 1330a, on which the reference element 300 is mounted. The moveable third base 1330a, by virtue of the action of the third rotary drive element 1331 and of the third transducer mechanism 1332, is moved along the third direction D3.

The first movement member 1310, the second movement member 1320 and the third movement member 1330, can be made as micrometric bars, which allow a precise positioning of the reference element 300.

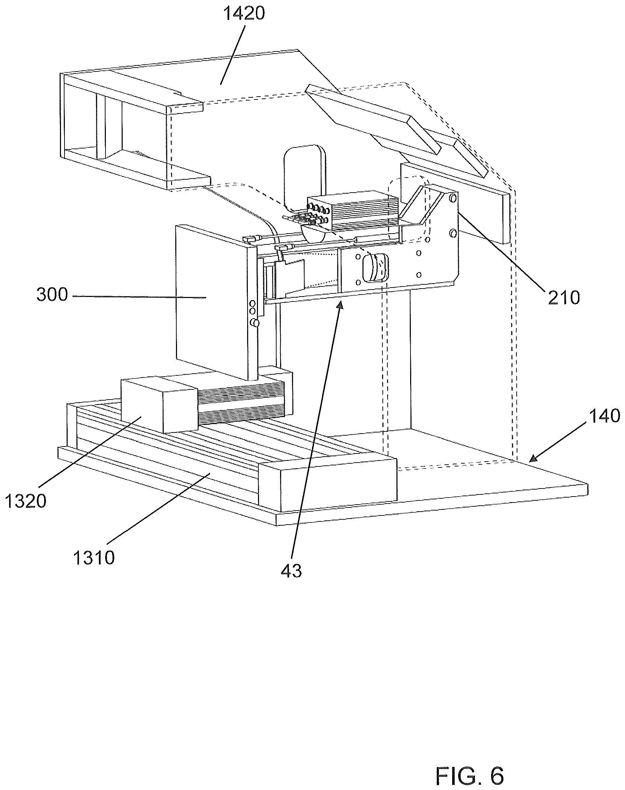

Figure 6 schematically shows the apparatus 100, with which an optical tool 43 has been associated.

The method according to the invention foresees to provide a plurality of optical tools 43 that must be calibrated.

Each optical tool 43 is adapted to be mounted on a mounting portion 410 of the automated structure 400.

The optical tools 43 are associated, in sequence, with the first engagement portion 110 of the frame 140, preferably through the respective support 210.

As stated, the first engagement portion 110, and in particular the fixing structure 1420, comprises a replica of the mounting portion 410.

The reference element 300 is associated with the second engagement portion 120 of the frame 140, preferably through the quoted movement structure 130.

For each optical tool 43 that is associated with the first engagement portion 110, the mutual position of the optical tool 43 and of the reference element 300 is adjusted.

In particular, the position of the emitter device 220 and/or of the detector device 230 can be adjusted with respect to the reference element 300.

In order to adjust the mutual position of the optical tool 43 and of the reference element 300, the reference element 300 is preferably moved with respect to the second engagement portion 120 of the frame 140.

In particular, the reference element 300 is moved by means of the aforementioned movement structure 130.

In the preferred embodiment, the fixing structure 1420 comprises at least the replica of a first mounting portion 410a and of a second mounting portion 410b that are different from one another, so as to be able to couple with optical tools 43 having supports 210 (i.e. coupling structures) that are different from each other.

The reference element 300 can be preferably moved according to three directions D1, D2, D3 substantially perpendicular to each other. For example, the first direction D1 and the second direction D2 can be substantially horizontal (i.e. parallel to the base plate 1410), and the third direction D3 can be substantially vertical.

Through each optical tool 43 that is associated with the first engagement portion 110, one or more images W are detected, showing at least one part of the reference element 300.

For each optical tool 43 that is associated with the first engagement portion 110 of the frame 140, a calibration is carried out at least based on the detected images W.

From a practical point of view, the optical tool 43 is fixed to the frame 140, and in particular to the fixing structure 1420 through its own support 210.

The detection element 300, through the movement structure 130, is arranged in one or more predefined positions, previously studied and determined to carry out the calibration of the specific optical tool. The shapes provided by the reference element 300 are thus detected by the optical tool 43, and in particular by the detector device 230 of the latter.

The images W thus detected will have to show, in a predefined manner, the shapes present on the reference element 300. If the representation provided by the images W is different from what is expected, a correction of the calibration of the optical tool 43 is carried out, which can involve both the optical parameters of the tool, and the position of the detector device 230 with respect to the support 210.

As an example, for the calibration of the optical tools 43 it is possible to use one or more of the methods described in the following documents:
[1] R. Y. Tsai, "A versatile camera calibration technique for high-accuracy 3D machine vision metrology using off-the-shelf TV cameras and lenses", IEEE Journal of Robotics and Automation, vol. 3, no. 4, pages 323-344, 1987;
[2] Zhang, Zhengyou, "A flexible new technique for camera calibration." Pattern Analysis and Machine Intelligence", IEEE Transactions on 22.11 (2000): 1330-1334;
[3] Horaud, Radu, Roger Mohr, and Boguslaw Lorecki, "Linear camera calibration." Robotics and Automation, Proceedings, 1992 IEEE International Conference on. IEEE, 1992;
[4] C.A.Luna, M.Mazo, J.L.Lazaro, and J.F.Vazquez, "Calibration of Line - Scan Cameras", IEEE Transactions on Instrumentation and Measurement, vol. 59, no. 8, pp. 2185-2190, Aug. 2010.

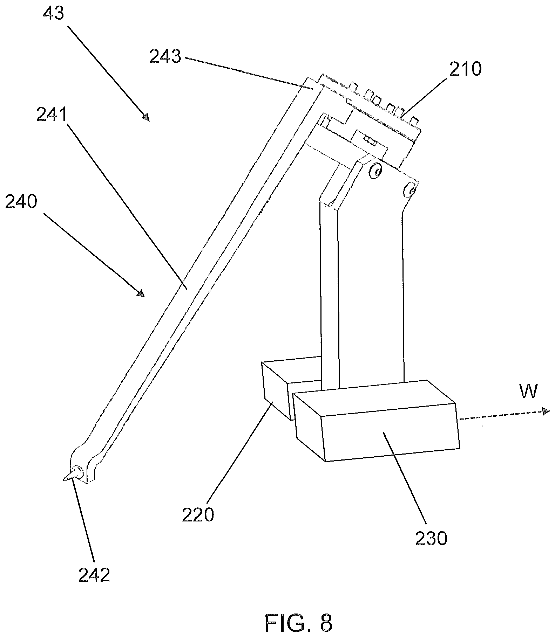

Preferably, a visible representation 240 of an optical axis of the optical tool 43 is associated with the optical tool 43 (figure 8).

Preferably, such a visible representation 240 is a tangible representation of said optical axis.

As an example, the representation 240 can comprise a shaped rod 241, equipped with a pointed portion 242; the longitudinal extension of the pointed portion 242 defines the optical axis of the optical tool 43.

Preferably, the representation 240 also comprises a fixing portion 243, opposite to the pointed portion 242, which allows the representation 240 itself to be fixed to the support 210.

The pointed portion 242 is substantially placed in contact with the reference element 300, in a predetermined position, before the images W are detected.

The Applicant considers that the use of the representation 240 facilitates the calibration operations of the optical tools 43, since, in the absence of such a representation, the optical axis of each tool would be substantially impossible to clearly identify. The calibration would thus require a much longer time and could also lead to less satisfactory outcomes.

The Applicant also considers that the representation 240, precisely because it is independent from the structure and from the assembly of the single optical tool, allows the calibration of the various optical tools to be made further homogeneous and uniform. The various optical tools 43 that must be mounted on the same mounting portion of the fixing structure 1420 can indeed be calibrated taking the same optical axis as reference, identified mechanically from the representation 240.

In accordance with the invention, a plurality of optical tools 43, belonging to at least two different groups 201, 202 are calibrated: each group is distinguished by the structure/mode of coupling foreseen for the support 210.

Thanks to the calibration apparatus 100, the optical tools 43 can be calibrated precisely and uniformly. In this way, an optical tool 43 for each group 201, 202 can be mounted on a respective anthropomorphic robotic arm 40a-40f of the automated structure 400; the remaining optical tools, already calibrated, will form a store, which the system 1 can take advantage of at the moment when an optical tool currently used has failures or malfunctions. This last optical tool can be replaced by an analogous optical tool, belonging to the same group, already calibrated in a suitable and homogeneous manner with respect to the tool to be replaced, so as to be able to be immediately used without introducing delays.

## Claims

1. Method for checking tyres, comprising:
providing a tyre checking system (1), said tyre checking system (1) comprising:
at least a checking unit (19, 23) for finished tyres (2) to be checked;
an automated structure (400) configured to move optical tools (43) in order to carry out checking operations on the finished tyres (2), said optical tools (43) being divided into at least a first group (201) and a second group (202), said automated structure (400) having a first mounting portion (410a) for integral association of the optical tools of the first group (201) and a second mounting portion (410b) for integral association with the optical tools of the second group (202);
providing a calibration apparatus (100), comprising a first engagement portion (110) and a second engagement portion (120);
associating each one of said optical tools (43), in sequence, with said first engagement portion (110), said first engagement portion (110) comprising a replica of said first mounting portion (410a) and a replica of said second mounting portion (410b);
associating a reference element (300) with said second engagement portion (120);
for each optical tool (43) associated with said first engagement portion (110), carrying out the following operations:
adjusting the mutual position of the optical tool (43) and of said reference element (300);
detecting, through the optical tool (43) mounted to said first engagement portion (110), one or more images (W) showing at least a part of said reference element (300);
performing a calibration of the optical tool (43) based on said detected images (W);
after calibration of said optical tools (43) has ended and before activation of said tyre checking system (1):
mounting one tool of the first group (201) on the first mounting portion (410a), the remaining optical tools of the first group (201) forming a respective first store;
mounting one tool of the second group (202) on the second mounting portion (410b), the remaining optical tools of the second group (202) forming a respective second store;
after activation of said tyre checking system (1):
detecting a failure or malfunction of the tool mounted on the first mounting portion (410a), and replacing the latter with a tool of said first store;
detecting a failure or malfunction of the tool mounted on the second mounting portion (410b), and replacing the latter with a tool of said second store.

2. Method according to claim 1, wherein mounting an optical tool (43) to said first engagement portion (110) comprises associating with said first engagement portion (110) a support (210) belonging to said optical tool (43).

3. Method according to claim 2, wherein adjusting the mutual position of the optical tool (43) and of said reference element (300) comprises moving, relative to said support (210), at least one of an emitter device (220) and a detector device (230) belonging to said optical tool (43).

4. Method according to claim 2 or 3, wherein each one of said optical tool (43) can be associated with said mounting portion (410) through the respective support (210).

5. Method according to any one of the preceding claims, wherein adjusting the mutual position of the optical tool (43) and of said reference element (300) comprises moving said reference element (300) relative to said second engagement portion (120) though a respective movement structure (130).

## Patentansprüche

1. Verfahren zur Überprüfung von Reifen, umfassend:
Bereitstellen eines Reifenüberprüfungssystems (1), wobei das Reifenüberprüfungssystem (1) umfasst:
zumindest eine Überprüfungseinheit (19, 23) für fertige Reifen (2), die überprüft werden sollen;
eine automatisierte Struktur (400), die dazu ausgestaltet ist, optische Werkzeuge (43) zu bewegen, um Überprüfungsvorgänge an den fertigen Reifen (2) auszuführen,
wobei die optischen Werkzeuge (43) in zumindest eine erste Gruppe (201) und eine zweite Gruppe (202) unterteilt sind, wobei die automatisierte Struktur (400) einen ersten Montageabschnitt (410a) zur integralen Zuordnung der optischen Werkzeuge der ersten Gruppe (201) und einen zweiten Montageabschnitt (410b) zur integralen Zuordnung mit den optischen Werkzeugen der zweiten Gruppe (202) aufweist;
Bereitstellen einer Kalibrierungsvorrichtung (100), umfassend einen ersten Eingriffsabschnitt (110) und einen zweiten Eingriffsabschnitt (120);
Zuordnen eines jeden der optischen Werkzeuge (43) der Reihe nach an den ersten Eingriffsabschnitt (110), wobei der erste Eingriffsabschnitt (110) ein Replikat des ersten Montageabschnitts (410a) und ein Replikat des zweiten Montageabschnitts (410b) umfasst;
Zuordnen eines Referenzelements (300) an den zweiten Eingriffsabschnitt (120);
Ausführen der folgenden Operationen für jedes optische Werkzeug (43), das dem ersten Eingriffsabschnitt (110) zugeordnet ist:
Einstellen der gegenseitigen Position des optischen Werkzeugs (43) und des Referenzelements (300);
Erfassen, durch das optische Werkzeug (43), das an dem ersten Eingriffsabschnitt (110) montiert ist, eines oder mehrerer Bilder (W), die zumindest einen Teil des Referenzelements (300) zeigen;
Durchführen einer Kalibrierung des optischen Werkzeugs (43) auf Grundlage der erfassten Bilder (W);
nachdem die Kalibrierung der optischen Werkzeuge (43) beendet wurde, und vor der Aktivierung des Reifenüberprüfungssystems (1) :
Montieren eines Werkzeugs der ersten Gruppe (201) an dem ersten Montageabschnitt (410a), wobei die verbleibenden optischen Werkzeuge der ersten Gruppe (201) einen jeweiligen ersten Speicher bilden;
Montieren ein Werkzeug der zweiten Gruppe (202) an dem zweiten Montageabschnitt (410b), wobei die verbleibenden optischen Werkzeuge der zweiten Gruppe (202) einen jeweiligen zweiten Speicher bilden;
nach Aktivierung des Reifenüberprüfungssystems (1):
Erfassen eines Fehlers oder einer Fehlfunktion des Werkzeugs, das an dem ersten Montageabschnitt (410a), und Austauschen mit einem Werkzeug aus dem ersten Speicher;
Erfassen eines Fehlers oder einer Fehlfunktion des Werkzeugs, das an dem zweiten Montageabschnitt (410a) montiert ist, und Ersetzen durch ein Werkzeug aus dem zweiten Speicher.

2. Verfahren nach Anspruch 1, wobei das Montieren eines optischen Werkzeugs (43) an dem ersten Eingriffsabschnitt (110) das Zuordnen eines Trägers (210), der zu dem optischen Werkzeug (43) gehört, an den ersten Eingriffsabschnitt (110) umfasst.

3. Verfahren nach Anspruch 2, wobei das Einstellen der gegenseitigen Position des optischen Werkzeugs (43) und des Referenzelements (300) das Bewegen zumindest einer von einer Sendevorrichtung (220) und einer Detektoreinrichtung (230), die zu dem optischen Werkzeug (43) gehört, relativ zu dem Träger (210) umfasst.

4. Verfahren nach Anspruch 2 oder 3, wobei jedes einzelne optische Werkzeug (43) dem Montageabschnitt (410) durch den jeweiligen Träger (210) zugeordnet werden kann.

5. Verfahren nach einem der vorhergehenden Ansprüche, wobei das Einstellen der gegenseitigen Position des optischen Werkzeugs (43) und des Referenzelements (300) das Bewegen des Referenzelements (300) relativ zu dem zweiten Eingriffsabschnitt (120) durch eine jeweilige Bewegungsstruktur (130) umfasst.

## Revendications

1. Procédé de vérification de pneus, comprenant le fait :
de fournir un système de vérification de pneus (1), ledit système de vérification de pneus (1) comprenant :
au moins une unité de vérification (19, 23) pour des pneus finis (2) devant être vérifiés ;
une structure automatisée (400) configurée pour déplacer des outils optiques (43) afin d'effectuer des opérations de vérification sur les pneus finis (2), lesdits outils optiques (43) étant divisés en au moins un premier groupe (201) et un deuxième groupe (202), ladite structure automatisée (400) ayant une première partie de montage (410a) pour une association intégrale des outils optiques du premier groupe (201) et une deuxième partie de montage (410b) pour une association intégrale avec les outils optiques du deuxième groupe (202) ;
de fournir un appareil d'étalonnage (100), comprenant une première partie d'engagement (110) et une deuxième partie d'engagement (120) ;
d'associer chacun desdits outils optiques (43), en séquence, à ladite première partie d'engagement (110), ladite première partie d'engagement (110) comprenant une reproduction de ladite première partie de montage (410a) et une reproduction de ladite deuxième partie de montage (410b) ;
d'associer un élément de référence (300) à ladite deuxième partie d'engagement (120) ;
d'effectuer, pour chaque outil optique (43) associé à ladite première partie d'engagement (110), les opérations suivantes :
l'ajustement de la position mutuelle de l'outil optique (43) et dudit élément de référence (300) ;
la détection, par l'outil optique (43) monté sur ladite première partie d'engagement (110), d'une ou de plusieurs image(s) (W) montrant au moins une partie dudit élément de référence (300) ;
la réalisation d'un étalonnage de l'outil optique (43) sur la base desdites images détectées (W) ;
après achèvement de l'étalonnage desdits outils optiques (43) et avant l'activation dudit système de vérification de pneus (1) :
le montage d'un outil du premier groupe (201) sur la première partie de montage (410a), les outils optiques restants du premier groupe (201) formant un premier magasin respectif ;
le montage d'un outil du deuxième groupe (202) sur la deuxième partie de montage (410b), les outils optiques restants du deuxième groupe (202) formant un deuxième magasin respectif ;
après activation dudit système de vérification de pneus (1) :
la détection d'une défaillance ou d'un dysfonctionnement de l'outil monté sur la première partie de montage (410a), et le remplacement de ce dernier par un outil dudit premier magasin ;
la détection d'une défaillance ou d'un dysfonctionnement de l'outil monté sur la deuxième partie de montage (410b), et le remplacement de ce dernier par un outil dudit deuxième magasin.

2. Procédé selon la revendication 1, dans lequel le montage d'un outil optique (43) sur ladite première partie d'engagement (110) comprend le fait d'associer à ladite première partie d'engagement (110) un support (210) appartenant audit outil optique (43).

3. Procédé selon la revendication 2, dans lequel l'ajustement de la position mutuelle de l'outil optique (43) et dudit élément de référence (300) comprend le fait de déplacer, par rapport audit support (210), au moins l'un d'un dispositif d'émission (220) et d'un dispositif de détection (230) appartenant audit outil optique (43).

4. Procédé selon la revendication 2 ou 3, dans lequel chacun desdits outils optiques (43) peut être associé à ladite partie de montage (410) par le support respectif (210).

5. Procédé selon l'une quelconque des revendications précédentes, dans lequel l'ajustement de la position mutuelle de l'outil optique (43) et dudit élément de référence (300) comprend le fait de déplacer ledit élément de référence (300) par rapport à ladite deuxième partie d'engagement (120) par une structure de déplacement respective (130).
